# EUROPEAN PATENT SPECIFICATION

(11) **EP 0 659 488 B1**
(45) Date of publication and mention of the grant of the patent: **17.03.1999**
(21) Application number: 94203731.8
(22) Date of filing: 22.12.1994
(51) Int. Cl.: B03C 3/76

(54) **A device for cleaning electrodes in an electrostatic precipitator, an electrostatic precipitator making use of such devices and a method of cleaning the precipitator**
Ein Reinigungsgerät für Elektroden eines Elektrofilters, ein Elektrofilter mit solchen Geräten und ein Reinigungsverfahren des Filters
Un appareil de dépoussiérage des électrodes d'un préripitateur électrostatique, un préripitateur électrostatique muni de ces appareils et méthode pour dépoussiérer un préripitateur

(30) Priority: 23.12.1993 DK 145793
(43) Date of publication of application: 28.06.1995
(73) Proprietor: FLS MILJO A/S, 2500 Valby (DK); SEVILLANA DE ELECTRICIDAD, S.A, E-41004 Sevilla (ES)
(72) Inventor: Lund, Carsten Riisberg, DK-2500 Valby (DK)
(74) Representative: Holtzer, Merete Byrch

(56) References cited:
- GB-A- 755 204
- US-A- 4 276 056
- PATENT ABSTRACTS OF JAPAN vol. 16, no. 548 (C-1005) 18 November 1992 & JP-A-04 210 263 (MATSUSHITA ELECTRIC IND CO LTD) 31 July 1992

## Description

The invention relates to a device for cleaning electrodes, preferably collecting electrodes, of a high-voltage supplied. electrostatic precipitator comprising a precipitator housing and a suspension arrangement for the electrodes mounted in the precipitator housing.

The invention further relates to an electrostatic precipitator using such devices and a method of cleaning the electrodes in a precipitator of this type. Such precipitators are used for cleaning smoke gasses from the combustion of fossil fuels, waste materials and the like in for instance power supply plants, combustion plants or cement plants.

Due to the operation mode of such precipitators dust is deposited on the electrodes and in particular on the collecting electrodes during the operation. This is well known in the art. In order to ensure the efficiency of the precipitator these electrodes need to be regularly cleaned of the deposited dust. This is normally effected by rapping or vibrating the electrodes.

The impact required for rapping or vibrating the electrodes is usually produced by a number of hammers being lifted by a rotating shaft extending across the precipitator width from their vertically suspended position and subsequently being released so as to revert to their vertical position. For each hammer an impact rod or an impact beam is provided which is hit by the hammer when the latter reverts to its vertical position and from the impact rod/beam the supplied impact energy is transmitted to a section of precipitator electrodes.

The collecting electrodes usually consist of vertically suspended, narrow and substantially rectangular plates which at their upper ends are secured to a suspension device in a precipitator housing containing the electrodes. The latter may be mounted in mutually parallel rows or precipitator sections, and the rapping is effected for the separate sections by means of drop hammers and impact rods for each section. Rapping devices of this type are known, e.g. from Duda: "Cement Data Handbook", 3rd. edition, pp. 596-598 (Bauverlag Gmbh - Wiesbaden und Berlin 1985) and from patent publications Nos. US-A-3,844,742 and EP-A-0398476.

In the so-called European type electrostatic precipitators drop hammers and impact rods connected to the lower ends of the collecting electrodes are generally used, which is associated with the drawback that the hammers and their carrier bridges occupy comparatively much space at the end of and below the precipitator section which, in turn, requires an increased length and height of the surrounding precipitator housing.

In the so-called American type electrostatic precipitators the rapping of the electrodes is often effected from the top of the precipitator, the rapping device then being mounted externally on top of the precipitator housing and the rapping being effected by means of small, vertically mounted impact rods which hit the electrode suspension vertically. In that case the individual impact rod is provided with slide sealings around the passage through the precipitator housing roof. Certain precipitators of the American type may alternatively be provided with a vertically acting rapping device mounted inside the precipitator housing which actuates the electrodes axially. In the American-type precipitators having the rapping device mounted on top of the precipitator housing roof, the volume occupied by the aggregate precipitator in the plant concerned is also substantially increased.

In addition to the drawbacks mentioned in connection with the European and American type precipitators, respectively, both precipitator types suffer from the drawback that it is difficult to control the rapping level and rapping frequency. Prior art rapping devices do not provide the possibility of controlling the rapping level during operation, and changes, if any, of the electrostatic precipitator generally neccesitate considerable changes of the rapping device.

From JP-A-4 210 263 it is known to provide an impact to an electrode in an air conditioning device by means of a single piezo electric element. This previously known device, however, is not suitable for cleaning electrodes in an electrostatic precipitator for flue gas cleaning.

It is therefore the object of the invention to provide a device for cleaning electrodes in an electrostactic precipitator, an electrostatic precipitator making use of such devices, and a method of cleaning the electrodes of such a precipitator, by which the above mentioned drawbacks as to precipitator size and rapping control is subtantially remedied.

This object is obtained with a device which a number of piezo electric elements which are series connected in their expansion direction and having the form of discs, which piezo electric elements are mutually separated by electrically conducting connection discs and electrically parallel connected to a voltage source enabling it to supply an impact of a predetermined level and frequency, every second electrically conducting connection disc being connected with the same phase of an applied alternating voltage.

Thus, a rapping device is provided which can be used both in connection with precipitators in which the collecting electrodes are suspended excentrically and in precipitators in which the collecting electrodes are secured by bolts, by which the drawbacks in the form of extensive space requirements and necessary comprehensive mechanical changes in the optimization of the cleaning efficiency at different operating states for the electrostatic precipitator are remedied, as it in connection with suitable voltage and frequency control means provides the possibility of controlling the excitation level and impact frequency.

Several piezo electric elements has in this way advantageously been coupled together to form a piezo electric actuator constituting a rapping device.

It is thus possible by means of piezo electric elements to form rapping devices in an electrostatic precipitator according to the invention, in which the rapping device(s) is/are mounted in the precipitator in a manner so as to apply impact or vibration force to at least one electrode when a voltage diffential is applied from the voltage field.

An actuator may similarly be caused to actuate several electrodes or electrode sections.

In the hitherto known rapping devices each individual hammer vibrates several electrodes or an entire electrode section and thus there is no possibility of actuating individual electrodes separately. Hence, the electrode in the impact actuated section proximal to the hammer receives the highest amount of energy, whereas the electrode distal to the the hammer receives the lowest amount of energy.

Consequently, in an electrostatic precipitator according to the invention a rapping device consisting of a piezo electric element or a piezo electric actuator is particularly advantageously mounted in such a manner that the impact actuation is only applied to one electrode when a voltage differential is applied to the actuator. This means that each electrode should be provided with one or more rapping devices and it is thereby ensured that the individual electrode is actuated uniformly and in the manner most effective for the cleaning.

In a preferred embodiment of the electrostatic precipitator according to the invention the individual piezo electric actuator is secured particularly expediently in a manner so that the impact actuation from the actuator is effected in the longitudinal direction of the collecting electrode. This ensures a satisfactory energy transmission in the electrode for all frequencies as the actuation with push and pull forces in the longitudinal direction of the electrode is substantially frequency independent as opposed to bending oscillations which are heavily frequency dependent. In case the actuator was mounted transversely to the longitudinal direction of the electrode a considerable portion of the energy transmission in the longitidinal direction of the electrode would be effected in the form of bending oscillations, which is not optimum.

In a preferred embodiment of the precipitator according to the invention two piezo electric actuators are mounted on each electrode. A symmetrical wave propagation is thereby obtained which further improves the energy transmission.

The piezo electric actuators may be expediently mounted in an edge bending on a plate shaped collecting electrode. This is desired partly in order to prevent the actuator from interfering in the precipitator function if mounted in the active volume of the precipitator, partly to ensure that the actuator is not damaged in case of flashovers in the precipitator, and partly to shield the actuator against the high voltage fields present in the precipitator, which may affect the function of the actuator. Thus, the shield formed serves as a Faraday-cage. Besides, the mounting of the actuator in the edge bending of a plate electrode is advantageous, as this portion of the electrode has an increased material stiffness and as a result thereof will provide a satisfactory energy transmission from the actuator.

The object of the invention is further obtained with a method wherein an electric voltage differential is applied to each piezo electric element, said voltage application being controllable from the area outside the electrostatic precipitator.

In an expedient embodiment of the method according to the invention the voltage applied is adjusted in order thereby to allow a regulation of the force by which the actuator actuates the electrode(s).

The frequency of the voltage applied may advantageously be adjustable simultaneously or independently of such a voltage regulation in order to make the cleaning of the electrode efficient.

A preferred embodiment of the device according to the invention is further explained below with reference to the drawings wherein
Fig. 1 shows an actuator produced of piezo electric elements seen from the side and from the end, and
Fig. 2 shows the actuator of Fig. 1 seen from the end,
Fig. 3 shows a plate shaped collecting electrode with two actuators of the type shown in Figs. 1 and 2 mounted on its sides, and
Fig. 4 shows by way of example a suspension arrangement for collecting electrodes.

Piezo electric elements are formed from materials, often crystalline materials, which are made piezo electric by a polarization. This means that the di-poles present in the materials are paralleled by being exposed to a direct voltage field and usually at an elevated temperature. When a voltage differential is subsequently applied to such a piezo electric element mechanical tensions will be generated in the material which as a result thereof will change form. The extent of the generated tensions in the material is proportional to the voltage applied at different voltage ranges.

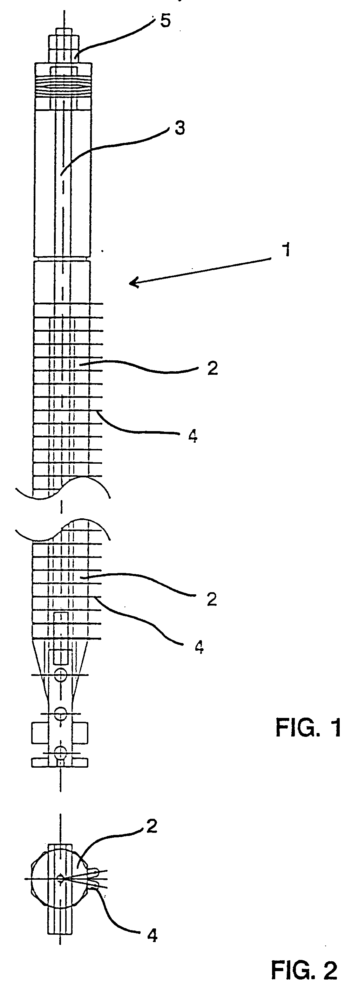

It appears from Figs. 1 and 2 that the actuator 1 comprises a number of piezo electric elements 2 having the form of cylindrical discs mounted in series on a central bolt 3, the discs being mutually separated by a thin metal disc 4. The piezo electric elements and the discs between them are prestressed to a predetermined force by clamping means 5 and spring means. Every second piezo electric element is connected to the same phase of an applied alternating voltage and as a result thereof the elements 2 are electrically parallel connected through the discs 4.

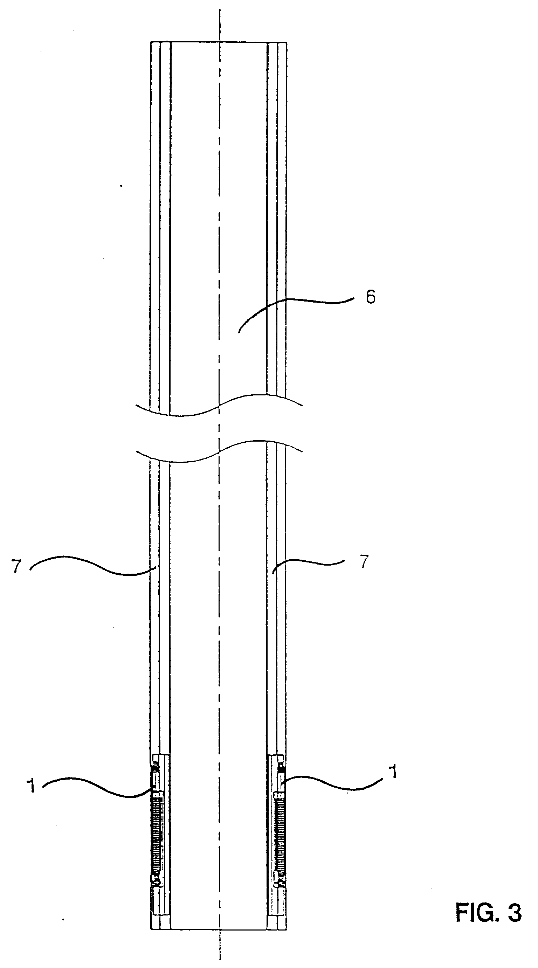

Fig. 3 shows how two actuators of the type shown in Fig. 1 are mounted in the bended side edges 7 of a plate shaped collecting electrode 6 so that the axis of the rod-shaped actuator 1 extends parallel with the longitudinal direction of the plate electrode. As each actuator 1 e.g. is secured at its ends with bolts, the actuators actuate the electrodes in the longitudinal direction when a voltage diffential is applied on the actuator.

As mentioned above a voltage diffential is applied to the piezo electric actuators thereby causing the piezo electric elements to be expanded or contracted and hence the electrode is exposed to an impact. Thus, the electrode may be subject to a push and pull force. The extent of the expansion of the piezo electric elements can be controlled by adjustment of the applied voltage and likewise the frequency of the impact can be controlled by adjustment of the frequency of applied voltage. For this purpose means for voltage adjustment and frequency adjustment are provided. These adjustment means are commonly known. Thus, the rapping force and rapping frequency can be adjusted outside the precipitator to the level needed at any time without any demanding reconstruction of the precipitator.

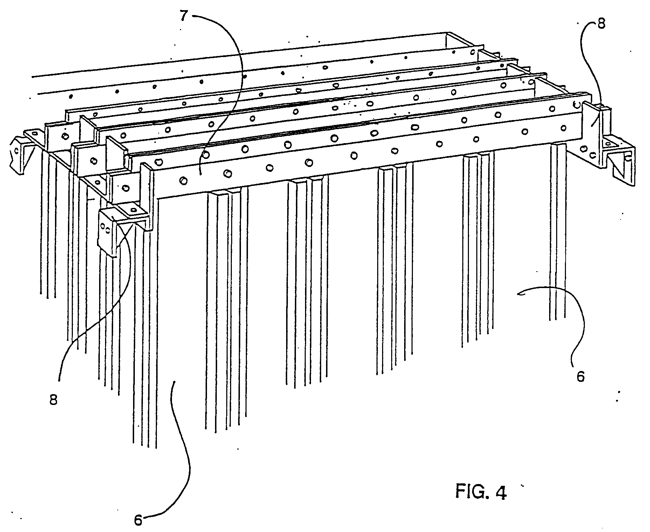

As shown in Fig. 4 the electrodes 6 are suspended vertically from a suspension arrangement comprising beam elements 7 to which the electrodes are secured, and which are supported at their ends by supporting elements 8 secured to the precipitator housing. This will not be further explained at this point as it is not important for the invention. However, a similar construction is described in connection with another rapping device in US patent No. 5,366,540.

## Claims

1. A device for rapping electrodes (6), preferably collecting electrodes, in a high voltage supplied electrostatic precipitator, **characterized** in that the device comprises a number of piezo electric elements (2) which are series connected in their expansion direction and having the form of discs, which piezo electric elements (2) are mutually separated by electrically conducting connection discs (4) and electrically connected in parallel to a voltage source being able to supply an impact of a predetermined level and frequency, every second electrically conducting connection disc (4) being connected with the same phase of an applied alternating voltage.

2. An electrostatic precipitator comprising a housing, a suspension arrangement mounted in the housing, discharge and collecting electrodes suspended in said arrangement and at least one device according to claim 1 for cleaning the electrodes, **characterized** in that the rapping device is mounted in the precipitator in a manner so as to apply impact or vibration force to at least one electrode (6) when a voltage diffential is applied from the voltage field.

3. An electrostatic precipitator according to claim 2, **characterized** in that the rapping device is mounted in such a manner that several electrodes (6) are rapped simultaneously when a voltage differential is applied to the device.

4. An electrostatic precipitator according to claim 2, **characterized** in that at least one piezo electric actuator (1) is secured to an electrode to provide an impact substantially in the longitudinal direction of the electrode (6).

5. An electrostatic precipitator according to claim 2 or 4, **characterized** in that it comprises two actuators (1) mounted on each separate electrode (6).

6. An electrostatic precipitator according to claim 4 or 5, **characterized** in that each actuator (1) is incorporated into and secured to a bent edge (7) of a plate electrode (6).

7. A method of cleaning electrodes in a electrostatic precipitator of the type stated in claims 2-6, **characterized** in that an electric voltage differential is applied to each piezo electric element, said voltage differential being controllable from the area outside the electrostatic precipitator.

8. A method according to claim 7, **characterized** in that the voltage difference is varied to adjust the excitation level of the rapping device.

9. A method according to claim 7 or 8, **characterized** in that the frequency of the applied voltage differential is varied to adjust the oscillation frequency of the rapping device to the operating state of the electrostatic precipitator.

## Patentansprüche

1. Vorrichtung zum Freiklopfen von Elektroden (6), vorzugsweise Niederschlagselektroden, in einer hochspannungsversorgten elektrostatischen Niederschlageinrichtung, dadurch gekennzeichnet, daß die Vorrichtung eine Anzahl von piezoelektrischen Elementen (2) aufweist, die in ihrer Ausdehnungsrichtung in Reihe geschaltet sind, die Form von Scheiben aufweisen, wechselseitig durch elektrisch leitende Verbindungsscheiben (4) getrennt und elektrisch parallel mit einer Spannungsquelle verbunden sind, wobei sie in der Lage sind, Schläge einer vorbestimmten Stärke und Frequenz zu erzeugen und jede zweite elektrisch leitfähige Verbindungsscheibe (4) mit der gleichen Phase einer anliegenden Wechselspannung verbunden ist.

2. Elektrostatische Niederschlageinrichtung mit einem Gehäuse, einem in dem Gehäuse montierten Halterungsaufbau, in dem Aufbau gehaltenen Entladungs- und Niederschlagelektroden und zumindest einer Vorrichtung nach Anspruch 1 zum Reinigen der Elektroden, dadurch gekennzeichnet, daß die Freiklopfvorrichtung in der Niederschlageinrichtung in solcher Weise montiert ist, daß sie an zumindest eine Elektrode (6) Schläge oder Schwingungskräfte anlegt, wenn aus dem Spannungsfeld eine Spannungsdifferenz anliegt.

3. Elektrostatische Niederschlageinrichtung nach Anspruch 2, dadurch gekennzeichnet, daß die Freiklopfvorrichtung in solcher Weise montiert ist, daß mehrere Elektroden (6) gleichzeitig freigeklopft werden, wenn an der Vorrichtung eine Spannungsdifferenz anliegt.

4. Elektrostatische Niederschlageinrichtung nach Anspruch 2, dadurch gekennzeichnet, daß zumindest ein piezoelektrisches Betätigungselement (1) an einer Elektrode befestigt ist, um Schläge im wesentlichen in der Längsrichtung der Elektrode (6) zu erzeugen.

5. Elektrostatische Niederschlageinrichtung nach Anspruch 2 oder 4, dadurch gekennzeichnet, daß sie an jeder separaten Elektrode (6) montiert zwei Betätigungselemente (1) autweist.

6. Elektrostatische Niederschlageinrichtung nach Anspruch 4 oder 5, dadurch gekennzeichnet, daß jedes Betätigungselement (1) eingebaut ist in und befestigt ist an einer gebogenen Kante (7) einer Plattenelektrode (6).

7. Verfahren zum Reinigen von Elektroden in einer elektrostatischen Niederschlageinrichtung des Typs der Ansprüche 2-6, dadurch gekennzeichnet, daß an jedes piezoelektrische Element eine elektrische Spannungsdifferenz angelegt wird, wobei die Spannungsdifferenz aus dem Bereich außerhalb der elektrostatischen Niederschlageinrichtung steuerbar ist.

8. Verfahren nach Anspruch 7, dadurch gekennzeichnet, daß die Spannungsdifferenz variiert wird zur Einstellung der Anregungsstärke der Freiklopfvorrichtung.

9. Verfahren nach Anspruch 7 oder 8, dadurch gekennzeichnet, daß die Frequenz der angelegten Spannungsdifferenz variiert wird zur Einstellung der Schwingungsfrequenz der Freiklopfvorrichtung auf den Betriebszustand der elektrostatischen Niederschlageinrichtung.

## Revendications

1. Appareil de frappe d'électrodes (6) de préférence d'électrodes collectrices, dans un précipitateur électrostatique alimenté à haute tension, caractérisé en ce que l'appareil comprend un certain nombre d'éléments piézoélectriques (2) connectés en série dans leur direction de dilatation et ayant la forme de disques, les éléments piézoélectriques (2) étant séparés mutuellement par des disques conducteurs (4) de connexion et étant connectés électriquement en parallèle à une source de tension qui permet la transmission d'un impact de fréquence prédéterminée, un disque conducteur de connexion (4) sur deux étant connecté avec une même phase d'une tension alternative appliquée.

2. Précipitateur électrostatique comprenant un boîtier, un arrangement de suspension monté dans le boîtier, des électrodes de décharge et collectrices suspendues dans l'arrangement et au moins un appareil selon la revendication 1, destiné au nettoyage des électrodes, caractérisé en ce que l'appareil de frappe est monté dans le précipitateur de manière qu'il applique un choc ou une force de vibration à au moins une électrode (6) lorsqu'une différence de tension est appliquée à partir d'un champ de tension.

3. Précipitateur électrostatique selon la revendication 2, caractérisé en ce que l'appareil de frappe est monté de manière que plusieurs électrodes (6) soient frappées simultanément lorsqu'une différence de tension est appliquée à l'appareil.

4. Précipitateur électrostatique selon la revendication 2, caractérisé en ce qu'un organe piézoélectrique de manoeuvre au moins (1) est fixé à une électrode pour appliquer un impact pratiquement dans la direction longitudinale de l'électrode (6).

5. Précipitateur électrostatique selon la revendication 2 ou 4, caractérisé en ce qu'il comprend deux organes de manoeuvre (1) montés sur chaque électrode séparée (6).

6. Précipitateur électrostatique selon la revendication 4 ou 5, caractérisé en ce que chaque organe de manoeuvre (1) est incorporé à une électrode (6) en forme de plaque et est fixé à un bord courbé (7) de cette électrode.

7. Procédé de nettoyage d'électrodes dans un précipitateur électrostatique du type indiqué dans les revendications 2 à 6, caractérisé en ce qu'une différence de tension électrique est appliquée à chaque élément piézoélectrique, la différence de tension pouvant être réglée depuis une région qui se trouve en dehors du précipitateur électrostatique.

8. Procédé selon la revendication 7, caractérisé en ce que la différence de tension varie pour l'ajustement du niveau d'excitation de l'appareil de frappe.

9. Procédé selon la revendication 7 ou 8, caractérisé en ce que la fréquence de la différence de tension appliquée varie pour l'ajustement de la fréquence d'oscillation de l'appareil de frappe à l'état de fonctionnement du précipitateur électrostatique.
